# EUROPEAN PATENT APPLICATION

(11) **EP 3 208 749 A1**
(43) Date of publication of application: **23.08.2017**
(21) Application number: 15850118.9
(22) Date of filing: 25.08.2015
(51) Int. Cl.: G06K 19/077, B65D 5/42, B65C 1/02

(54) **LABEL INCLUDING RFID TAG, PRODUCT BOX TO WHICH LABEL INCLUDING RFID TAG IS ATTACHED, AND METHOD FOR ATTACHING RFID TAG AND LABEL**

(30) Priority: 13.10.2014 KR 20140137617
(71) Applicant: Hanmi IT Co., Ltd., Seoul 138-724 (KR)
(72) Inventor: LIM, Jong Hoon, Seoul 138-734 (KR); KIM, Chang Hui, Suwon Gyeonggi-do 443-380 (KR); IN, Kyung Ah, Suwon Gyeonggi-do 440-709 (KR)
(74) Representative: Gulde & Partner
(86) International application number: PCT/KR2015/008855
(87) International publication number: WO 2016/060374

(57) **Abstract**

A label including an RFID tag according to one embodiment of the present invention is configured to be selectively attached and detached in such a manner that one region of the label is attached and fastened onto a product box in a strong adhesive manner and a label region including an RFID tag is attached onto the product box in a weak adhesive manner, and thus a user is enabled to check information that is described on one region of the product box and is covered with the RFID tag. In this case, when the amount of information to be described on the product box is excessively large and thus all the information cannot be described, a space for the description of information can be enlarged by describing the remaining information in one region of the first base film of the label.

## Description

### Technical Field

The present invention relates generally to a label including an RFID tag, a product box onto which a label including an RFID tag is attached, and a method for attaching an RFID tag and a label, and more particularly to a label including an RFID tag, a product box onto which a label including an RFID tag is attached, and a method for attaching an RFID tag and a label, which can prevent the RFID tag from covering a product description part given on a product box.

The present invention claims the benefit of the filing date of Korean Patent Application No. 10-2014-0137617 filed on October 13, 2014, the content of which is hereby incorporated herein in its entirety.

### Background Art

Generally, barcodes are printed on or barcode stickers are attached onto the packing containers of products in order to facilitate the identification of the products. However, barcode systems have the limitation of contact-type information acquisition. Accordingly, in order to overcome the above limitation of the barcode systems, products developed to substitute radio frequency identification (RFID) tags for barcodes have been commercialized and popularized.

RFID technology is a technology that recognizes the information of each object and a surrounding environment by using a radio wave transmitted from an RFID tag attached to the object and collects, stores, processes, and tracks the information of the object, thereby providing various services, such as the positioning, remote processing and management of an object, the exchange of information between objects, etc. Furthermore, the RFID technology replaces conventional barcodes and enables product management to be networked and intellectualized, thereby driving innovation not only in distribution and product management but also in security, safety, environment management, etc.

According to Korean Patent Application Publication No. 10-2012-0063782 (published on June 18, 2012), which is conventional art, an RFID tag is attached onto a product box by attaching a label including the RFID tag onto an outside surface of the product box that is being transferred along a conveyer belt.

Meanwhile, among product boxes, medicine boxes require that descriptions of the uses of a medicine, directions for the use of the medicine, the effects of the medicine, etc. must be clearly given. There are many cases where descriptions of the uses of a medicine, etc. are given on the remaining surfaces, other than a surface on which the logo or name of the medicine is printed, without an empty space. Accordingly, there is not a sufficient empty space onto which a label can be attached. When a label is attached onto a description part, descriptions given on a product box are covered with an RFID tag, and thus a problem arises in that it is difficult to manage products by attaching RFID tags onto product boxes.

Meanwhile, the above-described background technology corresponds to technical information that has been possessed by the present inventor in order to contrive the present invention or that has been acquired in the process of contriving the present invention, and cannot be necessarily viewed as a well-known technology that had been known to the public before the filing of the present invention.

### Disclosure

### Technical Problem

An object of an embodiment of the present invention is to provide a label with an RFID tag attached thereonto in the form of a book label, which enables a label surface, onto which the RFID tag is attached, to be detached from a product box even when the label surface is attached onto the product box and covers information described on the product box, thereby enabling a user to fully check the information described on the product box.

### Technical Solution

As a technical solution for solving the above technical problem, according to a first aspect of the present invention, there is provided a label including an RFID tag, the label including: a first base film comprising a strong adhesive region defined as one region, and a weak adhesive region defined in a region different from the strong adhesive region; a first adhesive layer formed on the bottom surface of the strong adhesive region of the first base film; a second adhesive layer formed on the bottom surface of the weak adhesive region of the first base film, and configured to have adhesive force weaker than that of the first adhesive layer; and an RFID tag configured to be attached onto the weak adhesive region of the first base film.

The RFID tag may be attached onto the top surface of the weak adhesive region of the first base film.

The strong adhesive region may be defined as one side end of the first base film, and the weak adhesive region may be defined as the remaining region other than the one side end of the first base film.

The first base film may include a removal prevention cutout formed by cutting out one region of the first base film.

The removal prevention cutout may be formed in at least one of the strong adhesive region of the first base film and a region of the weak adhesive region of the first base film, onto which the RFID tag is attached, such that a cutout path is bent to have a predetermined angle.

The first base film may further include a grip portion in a non-adhesive state which is formed at an edge of the weak adhesive region which is farthest from the strong adhesive region.

The grip portion of the first base film may extend from the edge of the weak adhesive region which is farthest from the strong adhesive region, or may be formed at a corner of at least one of edges of the weak adhesive region.

The first base film may further include at least one bending line formed along a boundary between the strong adhesive region and the weak adhesive region.

The label including an RFID tag may further include: a second base film formed on the bottom surface of the first base film on which the first adhesive layer and second adhesive layer are formed; and a third adhesive layer formed throughout the overall bottom surface of the second base film, and configured to have adhesive force identical to that of the first adhesive layer.

The second base film may include a removal prevention cutout formed by cutting out one region of the second base film.

According to a second aspect of the present invention, there is provided a product box onto which a label including an RFID tag is attached, the product box including: a product box; and the label including an RFID tag according to claim 9, the label being attached onto an outside surface of the product box; wherein the strong adhesive region of the label is attached onto the front surface of the product box, and the label is bent along a boundary line between the weak adhesive region and the strong adhesive region and then the weak adhesive region is attached onto a side surface of the product box.

The second base film may be made of a transparent material, or may be formed such that information is printed thereon.

According to a third aspect of the present invention, there is provided a method for attaching an RFID tag and a label, the method including: transferring a product box; attaching a label including: a first base film comprising a strong adhesive region defined as one region, and a weak adhesive region defined in a region different from the strong adhesive region; a first adhesive layer formed on the bottom surface of the strong adhesive region of the first base film; and a second adhesive layer formed on the bottom surface of the weak adhesive region of the first base film, and configured to have adhesive force weaker than that of the first adhesive layer; and attaching an RFID tag onto the weak adhesive region of the first base film.

Attaching the RFID tag may include attaching the RFID tag onto the top surface of the weak adhesive region of the first base film.

The product box may be formed in a hexahedral shape; and attaching the label includes: attaching the bottom surface of the strong adhesive region of the first base film onto an edge of the top surface of the product box; and bending the first base film along a boundary line between the weak adhesive region and the strong adhesive region and then attaching the bottom surface of the weak adhesive region onto a side surface of the product box neighboring the top surface of the product box.

The label may further include: a second base film formed on the bottom surface of the first base film on which the first adhesive layer and second adhesive layer are formed; and a third adhesive layer formed throughout the overall bottom surface of the second base film, and configured to have adhesive force identical to that of the first adhesive layer.

### Advantageous Effects

According to embodiments of the present invention, one region of the label is attached and fastened onto a product box in a strong adhesive manner, the label region including the RFID tag is attached onto the product box in a weak adhesive manner, and thus the weak adhesive region is configured to be selectively attached and detached, with the result that a user is enabled to check information that is described on one region of the product box and is covered with the RFID tag T. In this case, when the amount of information to be described on the product box is excessively large and thus all the information cannot be described, a space for the description of information can be enlarged by describing the remaining information in one region of the first base film of the label. Furthermore, the removal prevention cutout is formed by forming a slit in the label with a sharp material (for example, a knife), and thus a trace of detachment is left on the product box when a third person maliciously detaches the label, thereby preventing the third person from illegitimately detaching the label. Furthermore, the label is enabled to be bent and attached onto a product box, and thus an attachment range may be made flexible so that the label can be easily attached even onto a small-sized box.

### Description of Drawings

FIG. 1 is a plan view of a laterally detachable label including an RFID tag according to a first embodiment of the present invention;
FIG. 2 is a sectional view showing a cross section taken along line I-I' of FIG. 1;
FIG. 3 is a plan view of a vertically detachable label including an RFID tag according to a first embodiment of the present invention;
FIG. 4 is a sectional view showing a cross section taken along line II-II' of FIG. 3;
FIG. 5 is a perspective view of a laterally detachable label including an RFID tag according to a second embodiment of the present invention;
FIG. 6 is a sectional view of the laterally detachable label according to the second embodiment of FIG. 5;
FIG. 7 is a perspective view of a vertically detachable label including an RFID tag according to a second embodiment of the present invention;
FIGS. 8 and 9 are perspective views of product boxes onto which the laterally detachable label and the vertically detachable label according to the second embodiment of the present invention have been attached, respectively; and
FIG. 10 is a flowchart illustrating a method for attaching an RFID tag and a label according to a third embodiment of the present invention.

### Mode for Invention

Embodiments of the present invention will be described in detail below with reference to the accompanying drawings so that those having ordinary knowledge in the art to which the present invention pertains can easily practice the present invention. However, the present invention may be implemented in various different forms, and are not limited to the embodiments described herein. Furthermore, in the drawings, parts unrelated to descriptions are omitted in order to clearly describe the present invention, and similar reference symbols are assigned to similar components throughout the specification.

Throughout the specification, when a part is described as "including" a component, this means that another component is not be excluded from the part but may be included in the part, unless specifically described to the contrary.

First, the terms used herein are defined below.

"Adhesion" refers to the state where two objects are coupled into a single physical body via an adhesive. In this case, "strong adhesion" refers to the state in which two objects are strongly coupled to each other to such an extent that it is difficult to detach the two coupled objects from each other, and "weak adhesion" refers to the state in which two objects are coupled to each other to such an extent that the two coupled objects can be detached from each other. Meanwhile, "adhesion" is defined as having the same meaning as "strong adhesion."

The present invention will be described in detail with reference to the accompanying drawings below.

Labels each including an RFID tag according to first and second embodiments of the present invention are characterized in that a label surface onto which an RFID tag is attached is formed to be selectively attached onto and detached from a product box. In other words, the first and second embodiments of the present invention, even when the RFID tag covers some letters or pictures given on a product box, enable a user to fully check original information by detaching the label surface onto which the RFID tag is attached. In this case, such labels may be classified into a laterally detachable label and a vertically detachable label according to the direction in which a label surface onto which an RFID tag is attached is attached to and detached from a product box. The following detailed description will start with a description of a label including an RFID tag according to the first embodiment.

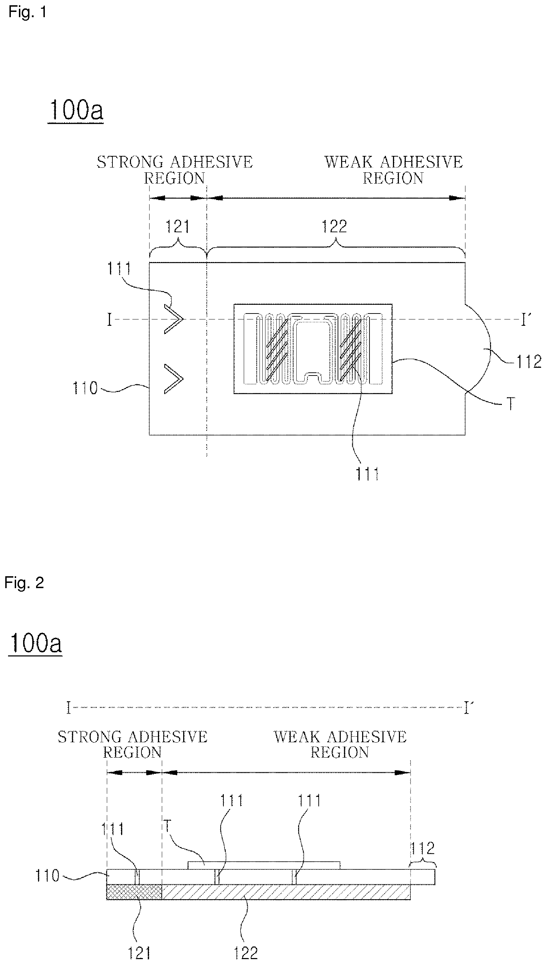

Referring to FIGS. 1 and 2, a laterally detachable label according to the first embodiment of the present invention is described.

The laterally detachable label 100a according to the first embodiment includes a first base film 110, a first adhesive layer 121, a second adhesive layer 122, and an RFID tag T.

The first base film 110 is configured to support the RFID tag T. The bottom surface of the first base film 110 is attached onto a product box, and thus the RFID tag T is enabled to be fastened onto the product box. The first base film 110 may be made of a transparent or opaque material, and may be made of various materials, such as synthetic resin, polyurethane resin, vinyl resin, acrylic resin, epoxy resin, etc.

The first base film 110 may be divided into a strong adhesive region and a weak adhesive region. The strong adhesive region is a region which is defined as the range of one side end of the first base film and on the bottom surface of which a strong adhesive material is formed. The weak adhesive region is a region which is defined as the remaining region of the first base film other than the strong adhesive region and on which a weak adhesive material is formed.

Furthermore, the first base film 110 may include at least one removal prevention cutout 111. The removal prevention cutout 111 may be formed in at least one of the strong adhesive region and the weak adhesive region. The removal prevention cutout 111 is a region formed by cutting out one region of the first base film 110, and may be formed by cutting out one region of the first base film 110 with a sharp steel material (for example, a knife). Referring to FIG. 1, the removal prevention cutout 111 is formed within the edge (i.e., periphery) of the first base film 110. The removal prevention cutout 111 may be formed to be bent so as to form a predetermined angle in a shape, such as a sideways V (">"), an "X"-letter shape, the left square bracket "[", or the like, or may be formed in the shape of a combination of general rectilinear lines, such as a slash "/" or the like. However, the removal prevention cutout 111 is not limited to these examples, but may be formed in various shapes.

In the case where the removal prevention cutout 111 has been formed in the label 100a, when a third person attempts to detach the label 100a once attached onto a box made of a paper material, the overall label 100a is not completely detached, but part of the label 100a is detached based on the removal prevention cutout 111 and the other part is left on the box. Alternatively, the label 100a is detached in the state in which a flaw (for example, the flaw in which a surface of the box made of a paper material has not been completely detached) is left on the box made of a paper material. As a result, the removal prevention cutout 111 can prevent fraudulent cases where a third person detaches the label 100 attached onto a product box, disguises a product as a new product, and resells the product, and so forth.

Furthermore, the first base film 110 may further include a grip portion 112. The grip portion 112 is a portion extending from the edge of the weak adhesive region of the first base film 110, and has a non-adhesive state because it has no adhesive layer on the bottom surface thereof, unlike the other regions of the first base film 110. The reason why the grip portion 112 has a non-adhesive state is to enable a user to easily detach the label 100a when the user attempts to detach the label 100a onto which the RFID tag T has been attached. Furthermore, in order to be suitable for detachment in a lateral direction, the grip portion 112 may extend from one edge of the weak adhesive region which is farthest from the strong adhesive region.

The first adhesive layer 121 and the second adhesive layer 122 are formed on the bottom surfaces of the strong adhesive region and weak adhesive region of the first base film 110, and have adhesive force so that the first base film 110 can be attached onto an outside surface of a product box. In this case, a particular point is that the adhesive force of the first adhesive layer 121 is stronger than the adhesive force of the second adhesive layer 122. Accordingly, the first adhesive layer 121 has strong adhesive force, and thus enables one side of the first base film 110 to be fastened onto the outside surface of the product box. Furthermore, the second adhesive layer 122 has weak adhesive force. Accordingly, although the second adhesive layer 122 enables the label 100a to be fastened onto the product box when the label 100a is first attached onto the product box, it also enables the user to detach the part of the first base film 110 in the weak adhesive region with his or her hand. In this case, the user can check information that is described on the outside surface of the product box and is covered with the RFID tag T.

The first and second adhesive layers 121 and 122 may be formed by applying adhesive materials having different adhesive forces onto the bottom surface of the first base film 110, or may be formed by applying a material having the same adhesive force onto the bottom surface of the first base film 110 and then performing an adhesive force weakening process only on the weak adhesive region of the first base film 110.

The RFID tag T is attached onto the weak adhesive region of the first base film 110, and enables a user to manage the product by sending stored information about the product box and the product to an RFID reader when detecting a signal of the RFID reader. Although the RFID tag T is preferably attached onto the top surface of the weak adhesive region of the first base film 110, it may be attached onto the bottom surface of the weak adhesive region of the first base film 110. The case where the RFID tag T is attached onto the bottom surface of the weak adhesive region of the first base film 110 has an advantage in that a larger space for the description of letters or a passage can be ensured on the top surface of the first base film 110 because there is no concern that letters or a passage described on the top surface of the first base film 110 are covered with the RFID tag T.

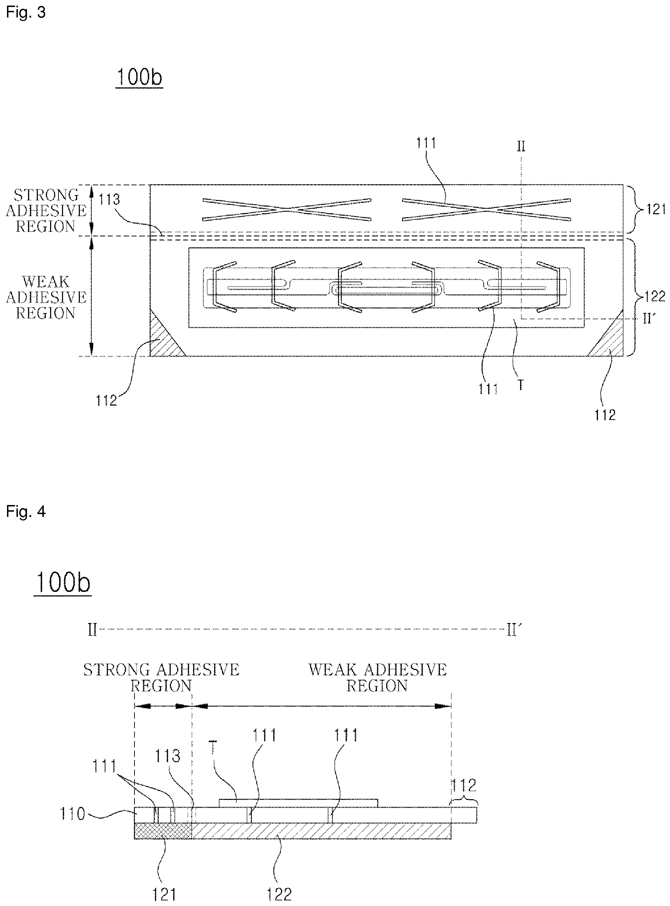

Thereafter, referring to FIGS. 3 and 4, a vertically detachable label 100b according to the first embodiment of the present invention is described.

The vertically detachable label 100b according to the first embodiment includes a first base film 110, a first adhesive layer 121, a second adhesive layer 122, and an RFID tag T in the same manner as the laterally detachable label 100a.

The vertically detachable label 100b is different from the laterally detachable label 100a only in that the lateral width of the vertically detachable label 100b is formed to be greater than that of the laterally detachable label 100a, and thus the vertically detachable label 100b is configured such that a user can easily detach the weak adhesive region of the first base film 110 in a vertical direction.

Furthermore, the vertically detachable label 100b may include at least one bending line 113 so that it can be attached over two surfaces of a product box. The bending line 113 is formed near the boundary between a strong adhesive region and a weak adhesive region. When a single bending line 113 is formed, the single bending line 113 may be formed along the boundary line between the strong adhesive region and the weak adhesive region. In contrast, when two or more bending lines 113 are formed, the bending lines 113 may be formed within a predetermined distance range near the boundary line between the strong adhesive region and the weak adhesive region.

Furthermore, although the grip portion 112 of the vertically detachable label 100b may extend from one edge of the first base film 110 in the same manner as that of the laterally detachable label 100a, the grip portions 112 of the vertically detachable label 100b may be formed by defining the corners of the first base film 110 as having a non-adhesive state. Referring to FIG. 3, the grip portions 112 may be formed in two corners at one edge of the weak adhesive region which is farthest from the strong adhesive region of the first base film 110. In this case, the second adhesive layer 122 is configured such that it is not formed in the regions of the bottom surface of the weak adhesive region of the first base film 110 which correspond to the grip portions 112. The grip portions 112 may be formed to have a color different from the overall color of the first base film 110 in order to indicate the grip regions in a non-adhesive state.

The above-described labels 100a and 100b each including the RFID tag T according to the first embodiment enable the surfaces of the labels 100a and 100b, onto which the RFID tags have been attached, to be detached from product boxes so that users can check the regions of the product boxes covered with the RFID tags T. However, the size of a region used to fasten each of the first base films 110 onto the product box is merely the area of one side end of the first base film 110 (the region of the first adhesive layer 121). Accordingly, when a user frequently attach and detach the first base films 110, the adhesive force of the first adhesive layers 121 is weakened, and thus a problem may arise in that the overall labels 100a and 100b may be detached after long periods of time.

In order to mitigate the above problem, the second embodiment of the present invention is characterized in that a label is configured in a double form. For this purpose, a second base film 130 and a third adhesive layer 140 are added to each of the labels 100a and 100b of the first embodiment.

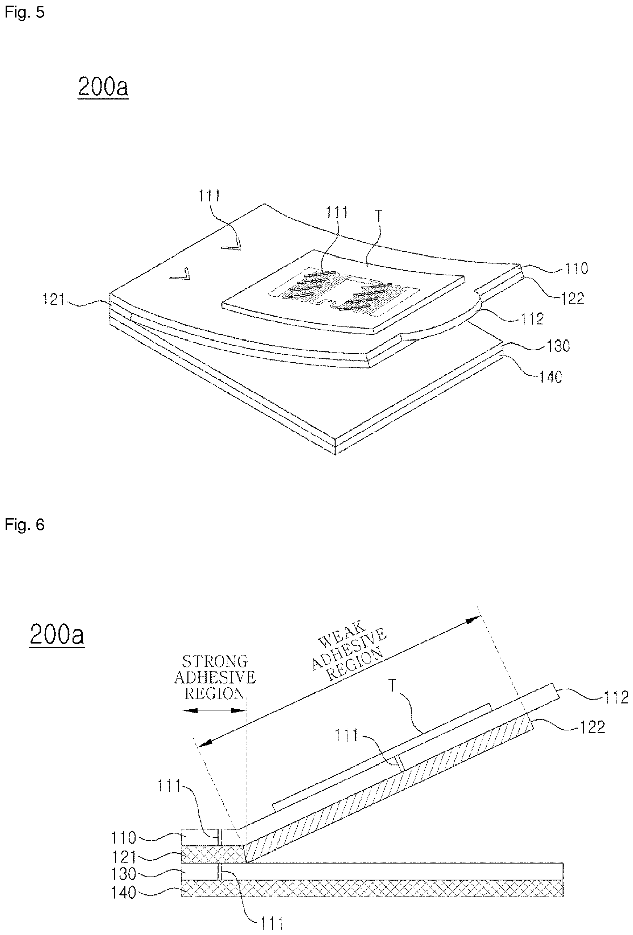

First, referring to FIGS. 5 and 6, a laterally detachable label 200a according to the second embodiment of the present invention further includes the second base film 130 and the third adhesive layer 140 under the bottom surfaces of a first adhesive layer 121 and a second adhesive layer 122 in addition to the configuration of the laterally detachable label 200a according to the first embodiment.

The second base film 130 is attached onto the bottom surface of a first base film 110 via first and second adhesive layers 121 and 122. Accordingly, the strong adhesive region of the first base film 110 is fastened onto the second base film 130, and the weak adhesive region of the first base film 110 is detachably adhered onto the top surface of the second base film 130. The second base film 130 is configured such that the overall surface thereof is fastened onto a product box, and thus does not include a grip portion 112. Accordingly, the second base film 130 may be formed in a size identical to that of the first base film 110 except for the grip portion 112. Furthermore, the second base film 130 may be made of the same transparent or opaque material as the first base film 110, and may be configured such that specific information, such as letters, a picture, or the like, is printed thereon.

The third adhesive layer 140 is formed throughout the overall bottom surface of the second base film 130, and enables the second base film 130 to be completely fastened onto a product box. Accordingly, the third adhesive layer 140 may be configured to have strong adhesive force similar or identical to the adhesive force of the first adhesive layer 121.

Furthermore, a vertically detachable label 200b according to the second embodiment also further includes a second base film 130 and a third adhesive layer 140 in the same manner as the laterally detachable label 200a.

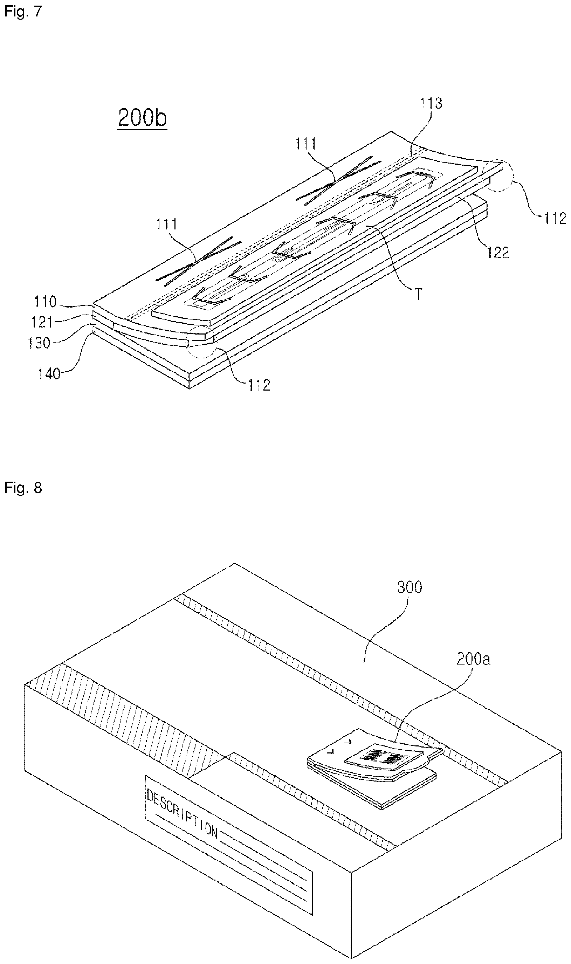

Referring to FIG. 7, the second base film enables a first base film 110 to be fastened via a first adhesive layer 121, and the first base film 110 is selectively attached to and detached from the second base film 130 via a second adhesive layer 122. Furthermore, the third adhesive layer 140 has strong adhesive force so that the overall bottom surface of the second base film 130 can be fastened onto an outside surface of a product box, and is formed on the bottom surface of the second base film 130.

According to the above addition of the second base film 130 and the third adhesive layer 140, each of the labels 200a and 200b according to the second embodiment is formed in the structure of a double label 200, functions to enable the bottom layer of each of the labels 200a and 200b to be completely fastened onto a product box, and is formed such that the top layer of each of the labels 200a and 200b, onto which an RFID tag T is attached, can be selectively attached and detached. Accordingly, the second embodiment can achieve the effect of more strongly fastening each of the labels 200a and 200b onto a product box than the first embodiment. In particular, in a structure, such as a double label, all information described on a product box may be read by making the same second base film 130 transparent, or additional information may be described by printing letters, a picture or the like on the base film 130.

The states where labels each including an RFID tag T according to an embodiment of the present invention are attached onto product boxes are described below. In the following, although a description is given based on the labels 200a and 200b of the second embodiment, the labels 100a and 100b of the first embodiment may be also practiced in the same manner as will be described below.

Referring to FIG. 8, the overall laterally detachable label 200a according to the second embodiment may be attached onto the top surface of a product box 300. However, when the width of a side surface of the product box 300 is identical to or greater than that of the laterally detachable label 200a, the laterally detachable label 200a may be attached onto the side surface of the product box 300.

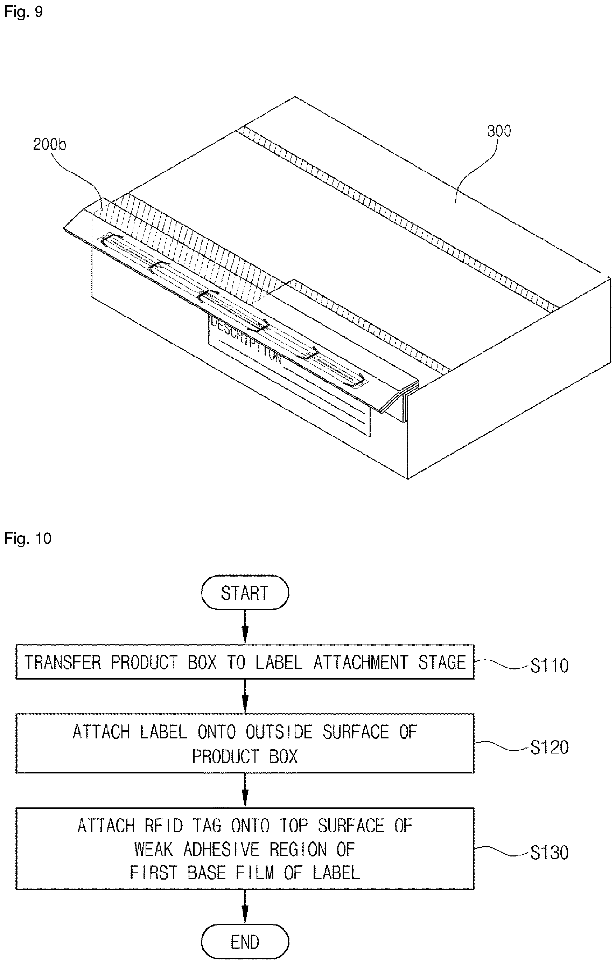

Referring to FIG. 9, the vertically detachable label 200b according to the second embodiment may be formed such that the strong adhesive region thereof is attached onto the top surface of the product box 300 and the weak adhesive region thereof is attached onto a side surface of the product box 300. In this case, the label 200b may be bent along a bending line 113 formed on the vertically detachable label 200b, and may be attached onto both the top and side surfaces of the product box 300.

In the case where a product included in the product box 300 is packed in a flat metal foil, as in press through packaging (PTP), when the surface of the product box 300 to which an RFID tag T has been attached and the plane in which a metal foil is disposed within the product box 300 is parallel to each other, the rate at which a reader recognizes the RFID tag T may be reduced due to the interference of the metal foil. In this case, in order to minimize the reduction in recognition rate, an arrangement needs to be made such that the surface on which the flat metal foil is disposed and the surface on which the RFID tag T is attached are vertical to each other.

Accordingly, when the product included in the product box 300 is not packed in a metal foil or the direction in which the metal foil is disposed is a direction vertical to the top surface of the product box 300, the label 200a is attached onto the top surface of the product box 300, as shown in FIG. 8. In contrast, when the metal foil included in the box is disposed in a direction parallel to the top surface of the product box 300, the label 200b is preferably attached such that an RFID tag T is disposed on a side surface of the product box 300, as shown in FIG. 9. When the size of a side surface of the product box 300 is considerably greater than that of the label 200b, the overall label 200 may be attached onto the side surface of the product box 300. As shown in FIG. 9, when the size of a side surface of a product box 300 is smaller than that of the label 200b, the label 200b may be bent and may be attached onto the top and side surfaces of the product box 300.

A method for attaching an RFID tag T and a label according to a third embodiment of the present invention will be described more specifically with reference to FIG. 10. Although the following description will be given based on the labels of the first embodiment, the following description may be applied to the labels of the second embodiment in the same manner.

First, product boxes 300 arranged in a single line or in a plurality of lines are transferred to a label attachment stage by using a means, such as a conveyer belt or the like, at step S110. These product boxes may be configured in a hexahedral shape.

A label roll around which label feed paper, onto which a plurality of labels 100a or 100b are attached, is wound is disposed above the label attachment stage, and a configuration configured to unwind the label feed paper toward the transferred product boxes 300 by rotating the label roll is disposed below the label attachment stage. In this case, each of the labels 100a or 100b attached onto the label feed paper may include or may not include an RFID tag T.

In the label attachment stage, each of the labels 100a or 100b may be detached from the label feed paper unwound from the label roll and may be attached onto an outside surface of each of the transferred product boxes 300 at step S120.

In this case, the overall label 100a or 100b may be attached onto one surface of the product box 300, as shown in FIG. 8, and may be attached onto two neighboring surfaces of the product box 300, as shown in FIG. 9. Generally, when contents inside the product box 300 are not packed using a PTP method or the plane on which a metal foil constituting the package of a PTP method is vertical to the top surface of the product box 300, the laterally detachable label 100a may be attached, as shown in FIG. 8. Furthermore, when contents inside the product box 300 are packed using a PTP method, the metal foil of a PTP package is disposed vertical to a side surface of the product box 300, and the height of the side surface of the product box 300 is low, the vertically detachable label 100b may be attached, as shown in FIG. 9.

In this case, a process of attaching the vertically detachable label 100b, as shown in FIG. 9, is now described. The strong adhesive region of the label 100b is attached onto an edge of the top surface of the product box 300. Thereafter, the label 100b is bent along the boundary line (i.e., the bending line 113 of FIG. 3) between the weak adhesive region and the strong adhesive region, and then the weak adhesive region is attached onto a side surface of the product box 300 neighboring the top surface of the product box 300.

Thereafter, an RFID tag T is attached onto the top surface of the first base film 110 corresponding to the weak adhesive region of the label 100a or 100b attached onto the product box 300 at step S130. If a label 100a or 100b including an RFID tag T has been attached at step S120, step S130 may be omitted.

As described above, according to the first to third embodiments of the present invention, one region of the label is attached and fastened onto a product box in a strong adhesive manner, the label region including an RFID tag is attached onto the product box in a weak adhesive manner, and thus the weak adhesive region is configured to be selectively attached and detached, with the result that a user is enabled to check information that is described on one region of the product box and is covered with the RFID tag T. In this case, when the amount of information to be described on the product box is excessively large and thus all the information cannot be described, a space for the description of information can be enlarged by describing the remaining information in one region of the first base film of the label. Furthermore, the removal prevention cutout is formed by forming a slit in the label with a sharp material (for example, a knife), and thus a trace of detachment is left on a product box when a third person maliciously detaches the label, thereby preventing the third person from illegitimately detaching the label. Furthermore, the label is enabled to be bent and attached onto a product box, and thus an attachment range may be made flexible so that the label can be easily attached even onto a small-sized box.

The above description of the present invention is merely for an illustrative purpose. It will be understood by those having ordinary knowledge in the art to which the present invention pertains that modifications can be easily made into other specific forms without departing from the technical spirit and essential features of the present invention. Therefore, it should be understood that the above-described embodiments are illustrative in all aspects and are not limitative. For example, each component described as having a single form may be practiced in a distributed form. In the same manner, components described as having a distributed form may be practiced in an integrated form.

The scope of the present invention is defined by the attached claims, rather than the above detailed description. Furthermore, all modifications and variations derived from the meanings, scope and equivalents of the claims should be construed as falling within the scope of the present invention.

## Claims

1. A label including an RFID tag, the label comprising:
a first base film comprising a strong adhesive region defined as one region, and a weak adhesive region defined in a region different from the strong adhesive region;
a first adhesive layer formed on a bottom surface of the strong adhesive region of the first base film;
a second adhesive layer formed on a bottom surface of the weak adhesive region of the first base film, and configured to have adhesive force weaker than that of the first adhesive layer; and
an RFID tag configured to be attached onto the weak adhesive region of the first base film.

2. The label of claim 1, wherein the RFID tag is attached onto a top surface of the weak adhesive region of the first base film.

3. The label of claim 2, wherein the strong adhesive region is defined as one side end of the first base film, and the weak adhesive region is defined as a remaining region other than the one side end of the first base film.

4. The label of claim 2, wherein the first base film comprises a removal prevention cutout formed by cutting out one region of the first base film.

5. The label of claim 4, wherein the removal prevention cutout is formed in at least one of the strong adhesive region of the first base film and a region of the weak adhesive region of the first base film, onto which the RFID tag is attached, such that a cutout path is bent to have a predetermined angle.

6. The label of claim 2, wherein the first base film further comprises a grip portion in a non-adhesive state which is formed at one edge of the weak adhesive region which is farthest from the strong adhesive region.

7. The label of claim 6, wherein the grip portion of the first base film extends from the edge of the weak adhesive region which is farthest from the strong adhesive region, or is formed at a corner of at least one edge of the weak adhesive region.

8. The label of claim 2, wherein the first base film further comprises at least one bending line formed along a boundary between the strong adhesive region and the weak adhesive region.

9. The label of claim 2, further comprising:
a second base film formed on the bottom surface of the first base film on which the first adhesive layer and second adhesive layer are formed; and
a third adhesive layer formed throughout an overall bottom surface of the second base film, and configured to have adhesive force identical to that of the first adhesive layer.

10. The label of claim 9, wherein the second base film comprises a removal prevention cutout formed by cutting out one region of the second base film.

11. A product box onto which a label including an RFID tag is attached, the product box comprising:
a product box; and
the label including an RFID tag according to claim 9, the label being attached onto an outside surface of the product box;
wherein the strong adhesive region of the label is attached onto a front surface of the product box, and the label is bent along a boundary line between the weak adhesive region and the strong adhesive region and then the weak adhesive region is attached onto a side surface of the product box.

12. The product box of claim 11, wherein the second base film is made of a transparent material, or is formed such that information is printed thereon.

13. A method for attaching an RFID tag and a label, the method comprising:
transferring a product box;
attaching a label comprising: a first base film comprising a strong adhesive region defined as one region, and a weak adhesive region defined in a region different from the strong adhesive region; a first adhesive layer formed on a bottom surface of the strong adhesive region of the first base film; and a second adhesive layer formed on a bottom surface of the weak adhesive region of the first base film, and configured to have adhesive force weaker than that of the first adhesive layer; and
attaching an RFID tag onto the weak adhesive region of the first base film.

14. The method of claim 13, wherein attaching the RFID tag comprises attaching the RFID tag onto a top surface of the weak adhesive region of the first base film.

15. The method of claim 13, wherein:
the product box is formed in a hexahedral shape; and
attaching the label comprises:
attaching a bottom surface of the strong adhesive region of the first base film onto an edge of a top surface of the product box; and
bending the first base film along a boundary line between the weak adhesive region and the strong adhesive region and then attaching a bottom surface of the weak adhesive region onto a side surface of the product box neighboring the top surface of the product box.

16. The method of claim 15, wherein the label further comprises:
a second base film formed on the bottom surface of the first base film on which the first adhesive layer and second adhesive layer are formed; and
a third adhesive layer formed throughout an overall bottom surface of the second base film, and configured to have adhesive force identical to that of the first adhesive layer.
